# EUROPEAN PATENT SPECIFICATION

(11) **EP 2 166 889 B1**
(45) Date of publication and mention of the grant of the patent: **08.01.2020**
(21) Application number: 08778546.5
(22) Date of filing: 02.07.2008
(51) Int. Cl.: A41H 43/00, B26F 1/26, B26F 3/00, B23K 26/00, B21D 28/06, B26F 1/00, B26F 1/44, B23K 26/38

(54) **CUTTING FRAME OF HIGH CUTTING EFFICIENCY**
SCHNEIDRAHMEN MIT HOHER SCHNEIDLEISTUNG
CHÂSSIS DE COUPE POUR EFFICACITÉ DE COUPE ÉLEVÉE

(30) Priority: 04.07.2007 KR 20070066910
(43) Date of publication of application: 31.03.2010
(73) Proprietor: LG Chem, Ltd., Seoul 07336 (KR)
(72) Inventor: LEE, Hokyung, Daejeon 305-761 (KR); HEO, SOONKI, Daejeon 305-761 (KR); LEE, Jongku, Daejeon 305-370 (KR)
(74) Representative: Hoffmann Eitle
(86) International application number: PCT/KR2008/003882
(87) International publication number: WO 2009/005287

(56) References cited:
- WO-A1-2004/041489
- WO-A2-2009/002122
- DE-A1- 3 135 021
- JP-A- 09 190 213
- JP-A- 2000 008 272
- JP-A- 2000 029 915
- KR-B1- 100 712 829
- KR-Y1- 200 407 944
- US-A- 3 464 293
- US-A1- 2008 164 627
- US-B1- 6 521 074

## Description

### FIELD OF THE INVENTION

The present invention relates to a cutting frame of high cutting efficiency, and, more particularly, to a cutting frame including a plurality of cutters for cutting one or more kinds of rectangular unit pieces having a relatively small size from a rectangular base material at a predetermined inclination, the cutters being mounted or formed in the cutting frame such that the cutters correspond to the rectangular unit pieces, wherein the cutters are mounted or formed in the cutting frame based on the array structure of the rectangular unit pieces such that a large majority of the remaining rectangular unit pieces, excluding the uppermost row rectangular unit pieces and the lowermost row rectangular unit pieces, are arranged while being adjacent to different rectangular unit pieces at four sides of each rectangular unit piece, and at least some combinations of adjacent four rectangular unit pieces form an island-type residue in the center thereof

### BACKGROUND OF THE INVENTION

WO 2004/041489 A discloses in combination the features of the pre-characterizing part of claims 1 and 6 below. DE 313502 A describes a cutting device for cutting rectangular unit pieces having a relatively small size, however, lacking the feature of cutting the rectangular unit pieces at a predetermined inclination. Further cutting devices are known from US 3,464,293 A, KR 100 712 829 B1 and KR 200 407 944 Y1 which shows a cutting frame according to the preamble of claim 1.

A technology for cutting a rectangular base material having a relatively large size to manufacture a plurality of rectangular unit pieces having a relatively small size has been adopted in various fields. For example, a base material sheet having a predetermined width and a long length is repeatedly cut by a cutting frame to simultaneously manufacture a plurality of rectangular unit pieces though a one-time cutting process.

Meanwhile, the size (width) of the base material is specified, whereas the size of the rectangular unit pieces may vary as needed, due to various factors, such as the limitation of base material suppliers, the efficiency aspect of the manufacturing process, the fluctuation in demand of rectangular unit pieces, etc. In this case, the cutting efficiency greatly varies depending upon in which structure the cutting frame is constructed, i.e., in which structure cutters for cutting the rectangular unit pieces from the base material are arranged, when cutting a plurality of desired rectangular unit pieces based on the size of the base material. The low cutting efficiency increases the amount of a scrap, produced from the base material, which will be disposed of after the cutting process, with the result that eventually, the manufacturing costs of the rectangular unit pieces increase.

When the size (width and length) of a base material is in constant proportion to the size (length and width) of specific rectangular unit pieces, it is possible to minimize the cutting loss by sequentially arranging the rectangular unit pieces such that the rectangular unit pieces are brought into contact with one another at positions having such constant proportion. However, when such constant proportion is not formed, the cutting loss may vary depending upon the array structure of the rectangular unit pieces.

Furthermore, when the rectangular unit pieces are to be cut at a predetermined angle to the longitudinal direction of the base material, a large amount of a scrap is inevitably produced.

In order to cut the rectangular unit pieces at a predetermined angle, there is generally used an array structure in which cutters (for example, knives) are arranged on the cutting frame such that the rectangular unit pieces corresponding to the cutters are adjacent to one another.

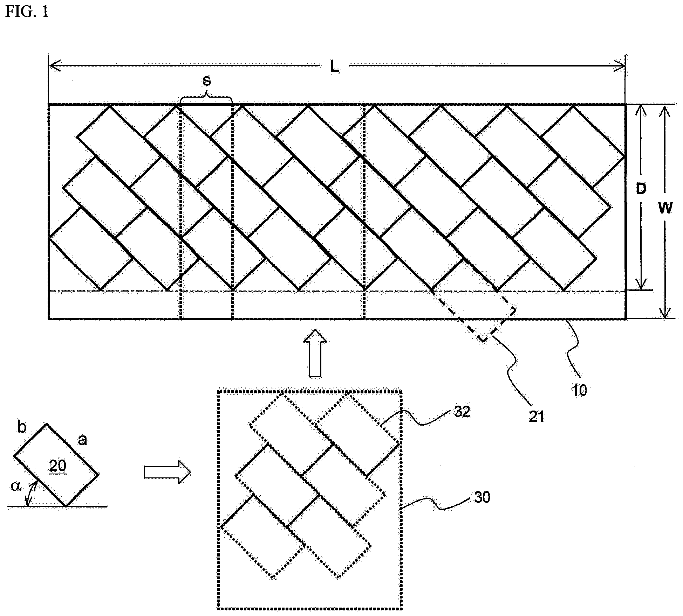

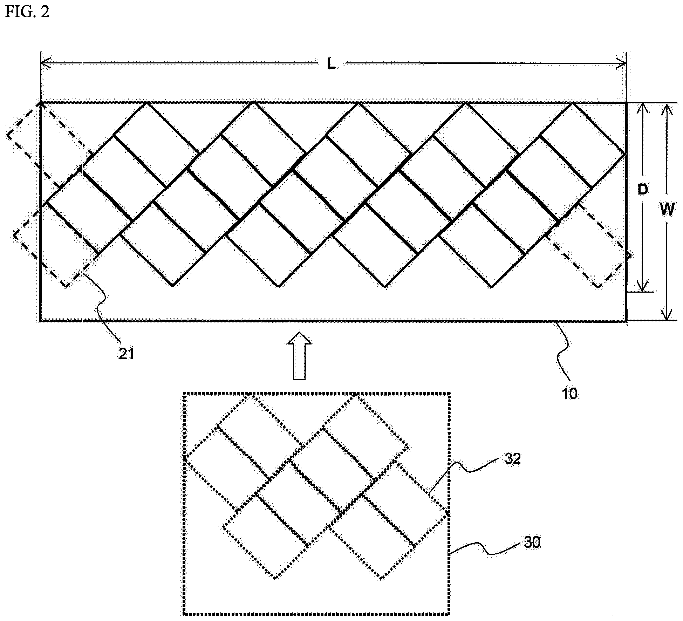

In connection with this matter, FIGS. 1 and 2 typically illustrate a conventional cutting frame in which rectangular unit pieces are located on a base material to construct cutters corresponding to the rectangular unit pieces. For convenience of description, the base material is illustrated to have a predetermined length.

Referring to these drawings, a plurality of rectangular unit pieces 20 are cut from a base material sheet 10 having a predetermined width and a long length. On a cutting frame 30 are arranged a plurality of cutters 32 corresponding to the rectangular unit pieces 20. Consequently, the array structure of the rectangular unit pieces 20 is substantially identical to that of the cutters 32.

The cutters 32 are mounted or formed in the cutting frame 30 such that the cutters 32 can cut a predetermined number (six in FIG. 1 and eight in FIG. 2) of the rectangular unit pieces 20 through a one-time cutting process. Consequently, the base material sheet 10 is cut by the cutting frame 30, and then the base material sheet 10 is cut again by the cutting frame 30 while the base material sheet 10 is overlapped by a predetermined length s in the longitudinal direction of the base material sheet 10. In this way, a series of cutting processes are carried out.

Each rectangular unit piece 20 is constructed in a rectangular structure in which a longitudinal side a of each rectangular unit piece 20 is longer than a lateral side b of each rectangular unit piece 20. Also, each rectangular unit piece 20 is inclined at an angle α of approximately 45 degrees to the longitudinal direction of the base material sheet 10. When the inclined rectangular unit pieces 20 are arranged on the base material sheet 10, it is possible to consider two array structures of the rectangular unit pieces as shown in FIGS. 1 and 2.

The first array structure of the rectangular unit pieces is to sequentially arrange the rectangular unit pieces such that the lateral sides b of the respective rectangular unit pieces coincide with one another, as shown in FIG. 1. According to this array structure, it is possible to cut a total of 24 rectangular unit pieces 20 from the base material sheet 10 having an effective width W and length L. However, it is not possible to cut a rectangular unit piece 21 located at a position deviating from the effective width W of the base material sheet 10.

In this array structure, only a cutting width D, not the effective width W, of the base material sheet 10 is substantially used, and therefore, the remaining width W-D is disposed of as a scrap. Since the rectangular unit pieces 20 are inclined at an angle of approximately 45 degrees, a scrap is also inevitably produced at the upper end region of the base material sheet.

The second array structure of the rectangular unit pieces is to sequentially arrange the rectangular unit pieces such that the longitudinal sides a of the respective rectangular unit pieces coincide with one another, as shown in FIG. 2. According to this array structure, it is possible to cut a total of 19 rectangular unit pieces 20 from the base material sheet 10 having an effective width W and length L.

In consideration of the above description, it can be seen that the cutting efficiency may vary according to the array structure of the rectangular unit pieces. However, when the rectangular unit pieces are inclined at a specific angle to the base material sheet, it is not easy to variously arrange the rectangular unit pieces. For this reason, only the array structure of the rectangular unit pieces in a structure in which specific sides (longitudinal sides or lateral sides) of the rectangular unit pieces coincided with one another as shown in FIG. 1 or 2 is mainly considered in the conventional art.

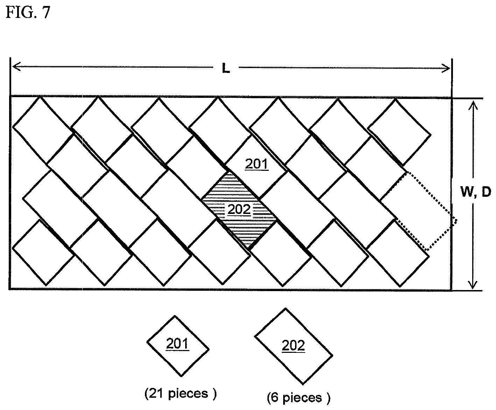

Furthermore, when two or more kinds of rectangular unit pieces having different sizes are to be cut from the same base material, the array structure of the rectangular unit pieces is very complicated. For this reason, consideration is given to only the array structure of the rectangular unit pieces in a structure in which specific sides of the rectangular unit pieces coincide with one another or central axes of the rectangular unit pieces coincide with one another (see FIG. 7).

Consequently, when an array structure of the rectangular unit pieces exhibiting higher cutting efficiency than that of the array structures of the rectangular unit pieces as shown in FIGS. 1 and 2 is provided, it is possible to lower the cutting loss and eventually reducing the manufacturing costs of products. The improvement of the cutting efficiency is more and more serious especially when the price of the base material is high and/or the rectangular unit pieces are to be manufactured on a large scale.

### SUMMARY OF THE INVENTION

Aspects of the present invention are defined in claims 1 and 9 below. The dependent claims are directed to optional and preferred features.

Therefore, the present invention has been made to solve the above problems, and other technical problems that have yet to be resolved.

As a result of a variety of extensive and intensive studies and experiments on a cutting frame, the inventors of the present invention have found that, when cutters are formed in a specific array structure of the rectangular unit pieces, which will be hereinafter described in detail, such that the cutters correspond to the respective rectangular unit pieces, the cutting efficiency is greatly improved as compared to the conventional array structure of the rectangular unit pieces. The present invention has been completed based on these findings.

Specifically, it is an object of the present invention to provide a cutting frame including cutters formed to exhibit high cutting efficiency when cutting a plurality of rectangular unit pieces inclined at a predetermined angle to the longitudinal direction of a rectangular base material having a relatively large size from the rectangular base material.

In accordance with one aspect of the present invention, the above and other objects can be accomplished by the provision of a cutting frame as defined in claim 1. The cutting frame includes a plurality of cutters for cutting one or more kinds of rectangular unit pieces having a relatively small size from a rectangular base material at a predetermined inclination, the cutters being mounted or formed in the cutting frame such that the cutters correspond to the rectangular unit pieces. The cutters are mounted or formed in the cutting frame based on an offset array structure of the rectangular unit pieces in which the rectangular unit pieces are offset from one another such that each side of any arbitrary rectangular unit piece is adjacent to not more than one different rectangular unit piece, wherein the rectangular unit pieces are inclined at an angle of 20 to 70 degrees, wherein at least some combinations of adjacent four rectangular unit pieces form an approximately rectangular-shaped island-type residue defined by the respective sides of the rectangular unit pieces, wherein the width ('cutting width') between the upper end vertex of the uppermost row rectangular unit pieces and the lower end vertex of the lowermost row rectangular unit pieces is 95% to 100% of the effective width of the base material.

Consequently, the cutting frame according to the present invention is constructed in a structure in which, although the rectangular unit pieces are arranged while being adjacent to one another as shown in FIGS. 1 and 2, one side of one rectangular unit piece does not completely coincide with, but is somewhat offset from, the corresponding side of another rectangular unit piece. This array structure of the rectangular unit pieces is not the one that can be generally easily considered when the cutters are arranged on the base material to cut inclined rectangular unit pieces. However, it was confirmed that this unique array structure of the rectangular unit pieces provides higher cutting efficiency than the conventional cutting frame to our surprise.

The cutting frame according to the present invention exhibits higher cutting efficiency than the conventional cutting frame by the unique array structure of the rectangular unit pieces as described above because the unit pieces are constructed in a rectangular structure, and the rectangular unit pieces are cut while being inclined at a predetermined angle to the longitudinal direction of the base material.

The inventors of the present invention confirmed that, when the unit pieces are constructed in a square structure or the unit pieces are cut while not being inclined, the cutting efficiency is further improved by an array structure in which the unit pieces are arranged while being adjacent to one another such that the opposite sides coincide with one another. Consequently, the cutting frame according to the present invention is preferably used to cut the rectangular unit pieces while the rectangular unit pieces are inclined at a predetermined angle.

In the above description, the term 'uppermost row unit pieces' and the term 'lowermost row unit pieces' mean the rectangular unit pieces substantially located at the uppermost side and the lowermost side among a series of rectangular unit pieces arranged on the rectangular base material. These rectangular unit pieces are characterized in that the rectangular unit pieces are commonly adjacent to different rectangular unit pieces only at first to third sides thereof.

On the other hand, a large majority of the remaining rectangular unit pieces, located between the uppermost row rectangular unit pieces and the lowermost row rectangular unit pieces, are arranged while being adjacent to different rectangular unit pieces at four sides of each rectangular unit piece, as previously defined. In the array structure of the rectangular unit pieces according to the conventional art, two sides of each rectangular unit piece, among four sides of each rectangular unit piece, are adjacent to two different rectangular unit pieces for each side, and the remaining two sides of each rectangular unit piece are adjacent to one different rectangular unit piece for each side. According to the conventional art, therefore, the number of different rectangular unit pieces to which one rectangular unit piece can be adjacent is five (see FIG. 2) or six (see FIG. 1).

In consideration of this matter, the array structure of the rectangular unit pieces according to the present invention is constructed in a structure in which the rectangular unit pieces are somewhat offset from one another such that each side of any arbitrary rectangular unit piece is adjacent to only one different rectangular unit piece. Consequently, at least some combinations of adjacent four rectangular unit pieces form an island-type residue in the center thereof. The 'island-type residue' means a residue having a relatively large size, produced by the offset array structure of the rectangular unit pieces as described above. This island-type residue is left on a scrap produced after cutting the base material in a small rectangular shape.

In the present invention, the structure in which a large majority of the remaining rectangular unit pieces, excluding the uppermost row rectangular unit pieces and the lowermost row rectangular unit pieces, are arranged while being adjacent to different rectangular unit pieces at four sides of each rectangular unit piece includes the structure in which some rectangular unit pieces are exceptionally adjacent to less than or greater than four rectangular unit pieces due to the variety of the array structure. However, a large majority of the rectangular unit pieces exhibit such regularity.

The base material may be a separate single material on which one-time or several-time cutting processes can be carried out or a continuous material having a predetermined width and a relatively very large length. The latter may be a long base material sheet. In this case, the base material sheet may be unwound from a roller, and the unwound base material sheet is sequentially cut by the cutting frame. In consideration of the manufacturing production efficiency and economical efficiency of the rectangular unit pieces, the base material is preferably a continuous material.

As previously described, all the rectangular unit pieces are cut from the base material while being inclined at a predetermined angle to the longitudinal direction of the base material. The rectangular unit pieces may be cut while being inclined at the predetermined angle to the base material, for example, when inherent physical properties of the base material in the longitudinal direction or in the lateral direction must be expressed by a predetermined angle with respect to the rectangular unit pieces. For example, the rectangular unit pieces may be inclined at an angle of 20 to 70 degrees.

The base material may be a film including layers ('absorption layers or transmission layers') that absorb or transmit only a specific-direction wave motion of light or an electromagnetic wave in the longitudinal direction or in the lateral direction, and the rectangular unit pieces cut from the base material is a relatively small-sized film of which the absorption layers or the transmission layers are inclined at an angle of 45 degrees.

The cutting frame according to the present invention has an array structure of the rectangular unit pieces to substantially increase the cutting area rate of the base material as compared with the conventional art. In the conventional art of FIGS. 1 and 2 as previously described, the cutting width D of the base material is greatly less than the effective width W of the base material. That is, the lower end region of the effective width W excluding the cutting width D is disposed of as a scrap.

Consequently, the cutting area rate is preferably increased through the provision of an array structure of the rectangular unit pieces to maximally utilize the effective width of the base material. For example, the width ('cutting width') between the upper end vertex of the uppermost row rectangular unit pieces and the lower end vertex of the lowermost row rectangular unit pieces may be 95% to 100% of the effective width of the base material.

In this case, the rectangular unit pieces are arranged while being somewhat offset from one another, as previously described, such that the rectangular unit pieces can approach the effective width of the base material. As a result, a large number of the rectangular unit pieces are arranged such that every four rectangular unit pieces are adjacent to one another, and an island-type residue is formed among every adjacent four rectangular unit pieces.

The effective width means the remaining region of the base material that can be substantially cut excluding a region of the base material that is needed not to be included in the cut rectangular unit pieces or regions that are not easy to cut (for example, the upper end region and the lower end region of the base material) due to the properties of the base material or the cause of the cutting process. According to circumstances, the effective width may be equal to the actual width of the base material.

The number of the combinations of every adjacent four rectangular unit pieces forming the island-type residue is preferably not less than 50%, more preferably not less than 90%, of the number of the remaining rectangular unit pieces excluding the uppermost row rectangular unit pieces and the lowermost row rectangular unit pieces, although the number of the combinations of every adjacent four rectangular unit pieces may vary depending upon the kind and number of the rectangular unit pieces.

When one kind of the rectangular unit pieces are cut or when the size of the rectangular unit pieces is not in direct proportion although two or more kinds of the rectangular unit pieces are cut, island-type residues are produced for most combinations of the rectangular unit pieces. The island-type residues may have the same size or different sizes.

Preferably, a cutting margin having a size less than that of the island-type residue is formed at regions where the rectangular unit pieces are adjacent to one another. The cutting frame independently cuts a plurality of small-sized rectangular unit pieces from a large-sized rectangular base material through the use of the cutters. Consequently, when the rectangular unit pieces are in contact with one another, i.e., facing sides of the adjacent rectangular unit pieces are simultaneously formed by a single cutter, it is difficult to handle the rectangular unit pieces as independent unit pieces at a subsequent process following the cutting process. Consequently, it is more preferred to arrange the rectangular unit pieces such that a small cutting margin is provided between the respective rectangular unit pieces. However, the cutting margin has a size less than that of the island-type residue as previously described.

In the present invention, one kind of the rectangular unit pieces may be cut, or two or more kinds of the rectangular unit pieces may be cut. In the structure in which two or more kinds of the rectangular unit pieces are arranged, however, the above described adjacency condition of the rectangular unit pieces and forming condition of the island-type residues are applicable as they are.

In the present invention, the array structure of the rectangular unit pieces substantially coincide with the cutters of the cutting frame or the array structure of the cutters. Consequently, it is interpreted that the array structure of the rectangular unit pieces means the cutters or the array structure of the cutters, so long as an additional description is not given.

The kind of the cutters is not particularly restricted so long as the cutters exhibit the structure or properties to cut the rectangular unit pieces from the base material. Typically, each of the cutters may be a knife for cutting, such as a metal knife or a jet water knife, or a light source for cutting, such as laser. According to a preferred embodiment, each of the cutters is a knife for cutting.

A scrap obtained after cutting one or more kinds of rectangular unit pieces from a base material at a predetermined inclination is also described.

The scrap has a plurality of bores corresponding to the rectangular unit pieces are continuously connected to one another by a cutting margin and arranged in an offset array structure of the rectangular unit pieces in which the rectangular unit pieces are offset from one another such that each side of any arbitrary rectangular unit piece is adjacent to not more than one different rectangular unit piece, and at least some combinations of adjacent four rectangular unit piece bores form an approximately rectangular-shaped island-type residue defined by the respective sides of the rectangular unit pieces, wherein the width ('cutting width') between the upper end vertex of the uppermost row rectangular unit pieces and the lower end vertex of the lowermost row rectangular unit pieces is 95% to 100% of the effective width of the base material.

The shape of the rectangular unit piece bores of the scrap reflects the cutters of the cutting frame or the array shape of the cutters. Consequently, in the cutting frame corresponding to the scrap, the cutters are spaced apart from each other between the rectangular unit pieces by a cutting margin, and the cutters are arranged such that a large majority of combinations of adjacent four rectangular unit pieces form an island-type residue.

### BRIEF DESCRIPTION OF THE DRAWINGS

The above and other objects, features and other advantages of the present invention will be more clearly understood from the following detailed description taken in conjunction with the accompanying drawings, in which:
FIGS. 1 and 2 are typical views illustrating a conventional cutting frame in which rectangular unit pieces are located on a base material to construct cutters corresponding to the rectangular unit pieces;
FIG. 3 is a typical view illustrating a cutting frame according to a preferred embodiment of the present invention in which one kind of rectangular unit pieces are located on a base material to construct cutters corresponding to the rectangular unit pieces;
FIG. 4 is a typical view illustrating an array structure of rectangular unit pieces having a predetermined size when the rectangular unit pieces are arranged on a specific cutting frame according to a conventional art;
FIGS. 5 and 6 are partial typical views illustrating embodiments of various
   array structures of rectangular unit pieces on the cutting frame according to the present invention under the same condition as in FIG. 4;
FIG. 7 is a typical views illustrating a conventional cutting frame in which two kinds of rectangular unit pieces are located on a base material to construct cutters corresponding to the rectangular unit pieces;
FIG. 8 is a partial typical view illustrating an array structure of two kinds of rectangular unit pieces according to a preferred embodiment of the present invention when the rectangular unit pieces are arranged on the cutting frame; and
FIG. 9 is a partial typical view illustrating the shape of a scrap.

### DETAILED DESCRIPTION OF PREFERRED EMBODIMENTS

Now, preferred embodiments of the present invention will be described in detail with reference to the accompanying drawings. It should be noted, however, that the scope of the present invention is not limited by the illustrated embodiments.

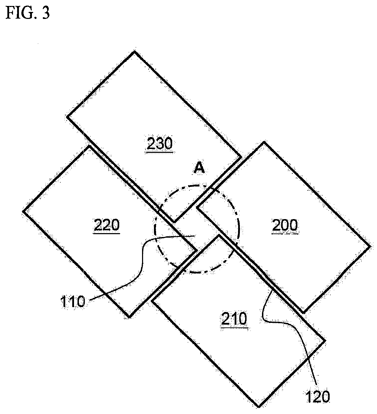

FIG. 3 is a typical view illustrating a cutting frame according to a preferred embodiment of the present invention in which one kind of rectangular unit pieces are located on a base material to construct cutters corresponding to the rectangular unit pieces.

Referring to FIG. 3, the rectangular unit pieces are arranged such that one rectangular unit piece 200 is adjacent to two rectangular unit pieces 210 and 230 but is not adjacent to one rectangular unit piece 220. In comparison with this array structure, one rectangular unit piece is in contact with six rectangular unit pieces in the array structure of the rectangular unit pieces as shown in FIG. 1, and one rectangular unit piece is in contact with five rectangular unit pieces in the array structure of the rectangular unit pieces as shown in FIG. 2. Consequently, some sides of the rectangular unit pieces are simultaneously in contact with two different rectangular unit pieces in the array structures of the rectangular unit pieces as shown in FIGS. 1 and 2. For reference, FIG. 3 illustrates only the two rectangular unit pieces 210 and 230 adjacent to the rectangular unit piece 200 but not the other two rectangular unit pieces for simplicity of illustration.

Also, the rectangular unit pieces are arranged such that an island-type residue 110 is formed among the adjacent four rectangular unit pieces 200, 210, 220, and 230 (see a circle drawn by an alternated long and short dash line). The island-type residue 110 is an approximately rectangular-shaped residue defined by the respective sides of the rectangular unit pieces. This structure is not seen from the array structures of FIGS. 1 and 2 at all.

In the array structure of the rectangular unit pieces as described above, the utilization of the base material sheet 100 is greater than that in FIG. 1. Preferably, the effective width W of the base material sheet 100 is substantially almost equal to the cutting width D.

Also, a cutting margin 120 having a size less than that of the island-type residue 110 is located between the rectangular unit pieces 200 and 210, which are adjacent to each other at one side of each rectangular unit piece. Consequently, when the rectangular unit pieces 200, 210, 220, and 230 are cut from the base material sheet 100, the respective rectangular unit pieces are effectively cut as independent unit pieces by the cutters of the cutting frame.

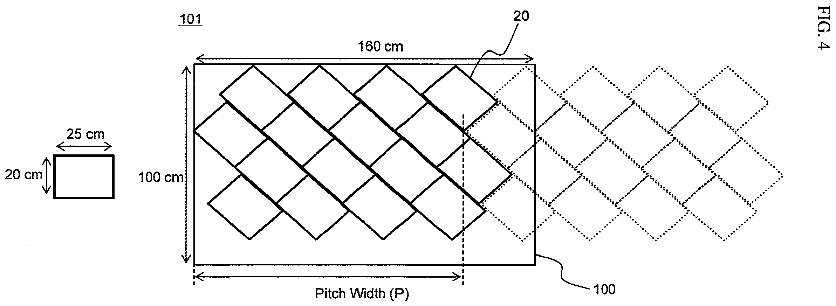

The fact that the cutting efficiency of the base material is improved by the array structure of the rectangular unit pieces on the cutting frame according to the present invention can be confirmed by FIGS. 4 to 6 and the following description with reference to the drawings.

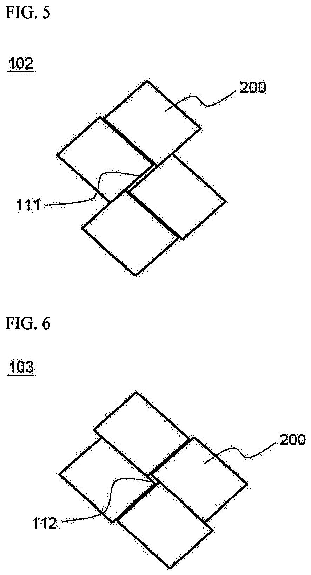

FIG. 4 is a typical view illustrating an array structure of rectangular unit pieces having a predetermined size when the rectangular unit pieces are arranged on a specific cutting frame according to a conventional art, and FIGS. 5 and 6 are partial typical views illustrating embodiments of various array structures of rectangular unit pieces on the cutting frame according to the present invention under the same condition.

Referring first to FIG. 4, rectangular unit pieces 20 having a length of 25 cm and a width of 20 cm are arranged on a cutting frame 100 having a length of 160 cm and a width of 100 cm such that the rectangular unit pieces 20 coincide with one another at the lateral side (single side) of each rectangular unit piece, as shown in FIG. 1, while the rectangular unit pieces 20 are inclined at an angle of 45 degrees.

According to the array structure 101 of the rectangular unit pieces, a total of 16 rectangular unit pieces 20 (to be exact, cutters corresponding to the rectangular unit pieces) are arranged on the cutting frame 100. The region where the rectangular unit pieces 20 are not arranged is disposed of as a scrap of a base material.

The cutting frame 100 continuously cuts a base material (not shown) at a predetermined pitch width P. When the number of the rectangular unit pieces 20 cut through a one-time cutting process is increased or when the pitch width P is reduced although the same number of the rectangular unit pieces 20 is cut through a one-time cutting process, it is possible to reduce the cutting loss accordingly.

According to the array structure 101 of the rectangular unit pieces as shown in FIG. 4, when a base material having a length of 100 m (i.e., a length of 1000 cm and a width of 100 cm) is cut, a total of 1372 rectangular unit pieces 20 are produced. That is, this array structure exhibits the productivity in which a total of 13.72 rectangular unit pieces 20 are produced from the base material having a length of 1 m. When the productivity is converted into the area rate, the productivity corresponds to the area rate of 63.41%. The base material corresponding to the remaining area rate of 36.59% is disposed of as a scrap of the base material.

On the other hand, the array structures 102 and 103 of the rectangular unit pieces as shown in FIGS. 5 and 6 have something in common with each other in that island-type residues 111 and 112 are formed among four adjacent rectangular unit pieces 200. However, the island-type residues 111 and 112 have different shapes. Specifically, the island-type residue 111 of FIG. 5 is formed in a rectangular shape having a length longer in one direction than the island-type residue 112 of FIG. 6. This results from greater offset between the rectangular unit pieces 200 in the array structure 102 of the rectangular unit pieces as shown in FIG. 5.

When a base material having the same size as that described in connection with FIG. 4 is cut based on the above-described array structures of the rectangular unit pieces, a total of 1521 rectangular unit pieces 200 are produced according to the array structure 102 of the rectangular unit pieces as shown in FIG. 5, and a total of 1630 rectangular unit pieces 200 are produced according to the array structure 103 of the rectangular unit pieces as shown in FIG. 6. When the productivity is converted into the area rate, the array structure 102 of the rectangular unit pieces as shown in FIG. 5 has an area rate of 69.9%, and the array structure 103 of the rectangular unit pieces as shown in FIG. 6 has an area rate of 74.88%. As a result, the cutting efficiencies of the array structure 102 of the rectangular unit pieces as shown in FIG. 5 and the array structure 103 of the rectangular unit pieces as shown in FIG. 6 are higher by 6.49% and 11.47% than that of the array structure 101 of the rectangular unit pieces as shown in FIG. 4.

Consequently, contrary to our expectations that the array structure shown in FIG. 4 in which the rectangular unit pieces are arranged such that the rectangular unit pieces are brought into tight contact with one another according to the conventional art exhibits the highest cutting efficiency, it is confirmed to our surprise that the offset array structures of FIGS. 5 and 6 exhibit higher cutting efficiencies. It is also confirmed that the cutting efficiency may vary depending upon the shape of the island-shaped residue.

FIG. 7 is a typical view illustrating a conventional cutting frame in which two kinds of rectangular unit pieces are located on a base material to construct cutters corresponding to the rectangular unit pieces. Simultaneously cutting two or more kinds of rectangular unit pieces is preferred especially when the respective kinds of the rectangular unit pieces are to be produced actively depending upon the fluctuation in demand of the rectangular unit pieces.

According to conventional art, when two kinds of rectangular unit pieces are arranged, the rectangular unit pieces are arranged such that the rectangular unit pieces coincide with one another at one side of each rectangular unit piece or such that the rectangular unit pieces are located on the same axis. FIG. 7 illustrates an array structure in which the rectangular unit pieces coincide with one another at one side of each rectangular unit piece. In this array structure, each of some rectangular unit pieces, e.g., rectangular unit pieces 201, is in contact with three different rectangular unit pieces, and each of some rectangular unit pieces, e.g., rectangular unit pieces 202, is in contact with five different rectangular unit pieces. That is, this array structure does not exhibit regularity. In addition, no island-type residues are produced in this array structure.

Although the array structure of the rectangular unit pieces as shown in FIG. 7 exhibits a structure in which the cutting width D is almost equal to the effective width W of the base material 100, examinations of various array structures of the rectangular unit pieces by the inventors of the present invention revealed that, even when two kinds of the rectangular unit pieces are arranged, the array structure according to the present invention exhibited higher cutting efficiency.

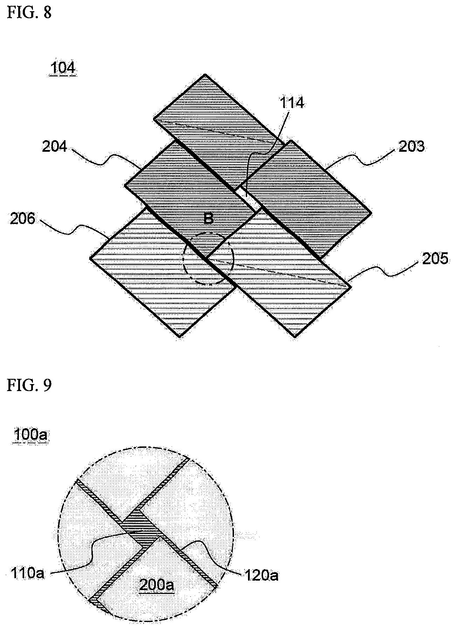

FIG. 8 is a partial typical view illustrating an array structure of two kinds of rectangular unit pieces according to a preferred embodiment of the present invention when the rectangular unit pieces are arranged on the cutting frame. The array structure of the rectangular unit pieces as shown in FIG. 8 exhibits higher cutting efficiency than that of FIG. 7.

Referring to FIG. 8, there is partially illustrated an exemplary array structure 104 in which small-sized rectangular unit pieces 203 and 204 and large-sized rectangular unit pieces 205 and 206 which have a size ratio of 30:34 are arranged in a number ratio of 2:3. Here, the size ratio is set based on the diagonal lengths of the rectangular unit pieces 203,204,205, and 206.

Island-type residues 114 are included in the array structure including the small-sized rectangular unit pieces 203 and 204 and the large-sized rectangular unit pieces 205 and 206. Consequently, the array structure of FIG. 8 is different from that of FIG. 7.

According to the array structure of the rectangular unit pieces, no island-type residue may be formed at a specific region B at which some rectangular unit pieces 204, 205, and 206 are adjacent to one another. In the array structure of the rectangular unit pieces according to the present invention, however, the island-type residues 114 are necessarily included in the combination of at least some rectangular unit pieces.

FIG. 9 is a partial typical view illustrating the shape of a scrap.

Referring to FIG. 9, the scrap 100a is obtained after cutting a plurality of rectangular unit pieces from a base material according to the array structure of the rectangular unit pieces as shown in FIG. 3. Specifically, when the base material is sequentially cut by a cutting frame including the array structure of the rectangular unit pieces as shown in FIG. 3, it is possible to obtain a scrap 100a in which a plurality of bores 200a corresponding to the rectangular unit pieces are continuously connected to one another by a cutting margin 120a, and the bores 200a corresponding to the rectangular unit pieces are arranged while being adjacent to different rectangular unit piece bores at four sides thereof by a gap corresponding to the cutting margin 120a.

Also, an island-type residue 110a having a size greater than that of the cutting margin 120a is formed among the adjacent four rectangular unit piece bores 200a of the scrap 100a.

Although the preferred embodiments of the present invention have been disclosed for illustrative purposes, those skilled in the art will appreciate that various modifications, additions and substitutions are possible, without departing from the scope of the invention as disclosed in the accompanying claims.

### INDUSTRIAL APPLICABILITY

As apparent from the above description, the cutting frame according to the present invention exhibits high cutting efficiency through a unique and regular array structure of rectangular unit pieces when the rectangular unit pieces, of which the direction particularity is required according to the properties of a material, are to be cut from a base material while the rectangular unit pieces are inclined to the base material. In particular, when a large amount of rectangular unit pieces are produced through mass production, it is possible to greatly reduce the total manufacturing costs of the rectangular unit pieces based on the high cutting efficiency.

## Claims

1. A cutting frame (30) including a plurality of cutters (32) for cutting one or more kinds of rectangular unit pieces (20) having a relatively small size from a rectangular base material at a predetermined inclination, the cutters (32) being mounted or formed in the cutting frame (30) such that the cutters (32) correspond to the rectangular unit pieces, **characterized in that**
the cutters (32) are mounted or formed in the cutting frame (30) based on an offset array structure of the rectangular unit pieces (20) in which the rectangular unit pieces (20) are offset from one another such that each side of any arbitrary rectangular unit piece (20) is adjacent to not more than one different rectangular unit piece (20),
wherein the rectangular unit pieces (20) are inclined at an angle of 20 to 70 degrees,
wherein at least some combinations of adjacent four rectangular unit pieces (20) form an approximately rectangular-shaped island-type residue (110) defined by the respective sides of the rectangular unit pieces,
wherein the width ('cutting width') between the upper end vertex of the uppermost row rectangular unit pieces (20) and the lower end vertex of the lowermost row rectangular unit pieces (20) is 95% to 100% of the effective width of the base material.

2. The cutting frame (30) according to claim 1, wherein the number of the combinations of the rectangular unit pieces (20) forming the island-type residue is not less than 50% of the number of the remaining rectangular unit pieces (20) excluding the uppermost row rectangular unit pieces (20) and the lowermost row rectangular unit pieces.

3. The cutting frame (30) according to claim 1, wherein a cutting margin having a size less than that of the island-type residue is formed at regions where the rectangular unit pieces (20) are adjacent to one another.

4. The cutting frame (30) according to claim 1, wherein each of the cutters (32) is a knife for cutting.

5. The cutting frame (30) according to claim 4, wherein the knife for cutting is a metal knife.

## Patentansprüche

1. Schneidrahmen (30), der eine Vielzahl von Schneidern (32) zum Schneiden einer oder mehrerer Arten von rechteckigen Einheitsstücken (20) beinhaltet, die eine relativ kleine Größe aufweisen, aus einem rechteckigen Ausgangsmaterial mit einer vorbestimmten Schrägstellung, wobei die Schneider (32) in dem Schneidrahmen (30) so angebracht oder ausgebildet sind, dass die Schneider (32) den rechteckigen Einheitsstücken entsprechen,
**dadurch gekennzeichnet, dass**
die Schneider (32) in dem Schneidrahmen (30) auf einer versetzten Anordnungsstruktur der rechteckigen Einheitsstücke (20) basierend angebracht oder ausgebildet sind, in denen die rechteckigen Einheitsstücke (20) so versetzt zueinander sind, so dass jede Seite eines beliebigen rechteckigen Einheitsstücks (20) nicht mehr als einem anderen rechteckigen Einheitsstück (20) benachbart ist,
wobei die rechteckigen Einheitsstücke (20) in einem Winkel von 20 bis 70 Grad abgeschrägt sind,
wobei mindestens einige Kombinationen von benachbarten vier rechteckigen Einheitenstücken (20) einen etwa rechteckig geformten Rest (110) vom Inseltyp ausbilden, der durch die jeweiligen Seiten der rechteckigen Einheitenstücke definiert ist,
wobei die Breite ("Schnittbreite") zwischen dem Scheitelpunkt des oberen Endes der rechteckigen Einheitenstücke (20) der obersten Reihe und dem Scheitelpunkt des unteren Endes der rechteckigen Einheitenstücke (20) der untersten Reihe, 95% bis 100% der Nutzbreite des Ausgangsmaterials beträgt.

2. Schneidrahmen (30) nach Anspruch 1, wobei die Anzahl der Kombinationen der rechteckigen Einheitsstücke (20), die den Rest vom Inseltyp bilden, nicht weniger als 50% der Anzahl der verbleibenden rechteckigen Einheitsstücke (20) beträgt, mit Ausnahme der rechteckigen Einheitsstücke (20) der obersten Reihe und der rechteckigen Einheitsstücke der untersten Reihe.

3. Schneidrahmen (30) nach Anspruch 1, wobei ein Schneidrand, der eine Größe aufweist, die kleiner als jene des Restes vom Inseltyp ist, in Bereichen gebildet wird, in denen die rechteckigen Einheitsstücke (20) benachbart zueinander sind.

4. Schneidrahmen (30) nach Anspruch 1, wobei jeder der Schneider (32) ein Messer zum Schneiden ist.

5. Schneidrahmen (30) nach Anspruch 4, wobei das Messer zum Schneiden ein Metallmesser ist.

## Revendications

1. Cadre de découpe (30) incluant une pluralité d'éléments de découpe (32) permettant de couper une ou plusieurs sortes de pièces unitaires rectangulaires (20) présentant une taille relativement petite à partir d'un matériau de base rectangulaire d'une inclinaison prédéterminée, les éléments de découpe (32) étant montés ou formés dans le cadre de découpe (30) de sorte que les éléments de découpe (32) correspondent aux pièces unitaires rectangulaires (20),
**caractérisée en ce que**
les éléments de découpe (32) sont montés ou formés dans le cadre de découpe (30) basé sur une structure d'éléments décalés composée des pièces unitaires rectangulaires (20) dans laquelle les pièces unitaires rectangulaires (20) sont décalées les unes par rapport aux autres de sorte que chaque côté de n'importe quelle pièce unitaire rectangulaire (20) arbitraire soit adjacente à pas plus d'une pièce unitaire rectangulaire (20) différente,
dans laquelle les pièces unitaires rectangulaires (20) sont inclinées selon un angle de 20 à 70 degrés,
dans laquelle au moins certaines combinaisons de quatre pièces unitaires rectangulaires (20) adjacentes forment un résidu du type îlot à peu près de forme rectangulaire (110) défini par les côtés respectifs des pièces unitaires rectangulaires,
dans laquelle la largeur (« largeur de découpe ») entre la pointe de l'extrémité supérieure de la rangée de pièces unitaires rectangulaires (20) la plus haute et la pointe de l'extrémité inférieure de la rangée de pièces unitaires rectangulaires (20) la plus basse représente 95 % à 100 % de la largeur effective du matériau de base.

2. Cadre de découpe (30) selon la revendication 1, dans lequel le nombre des combinaisons des pièces unitaires rectangulaires (20) formant le résidu du type îlot ne représente pas moins de 50 % du nombre des pièces unitaires rectangulaires (20) restantes exceptées les pièces unitaires rectangulaires (20) de la rangée la plus haute et les pièces unitaires rectangulaires de la rangée la plus basse.

3. Cadre de découpe (30) selon la revendication 1, dans lequel une marge de découpe présentant une taille inférieure à celle du résidu du type îlot est formée au niveau de régions où les pièces unitaires rectangulaires (20) sont adjacentes les unes aux autres.

4. Cadre de découpe (30) selon la revendication 1, dans lequel chacun des éléments de découpe (32) est une lame à découper.

5. Cadre de découpe (30) selon la revendication 4, dans lequel la lame à découper est une lame métallique.
